# EUROPEAN PATENT APPLICATION

(11) **EP 2 634 077 A1**
(43) Date of publication of application: **04.09.2013**
(21) Application number: 13156794.3
(22) Date of filing: 26.02.2013
(51) Int. Cl.: B62M 17/00

(54) **Electric power unit for vehicle**

(30) Priority: 28.02.2012 JP 2012042462; 28.02.2012 JP 2012042463
(71) Applicant: Musashi Seimitsu Industry Co., Ltd., Aichi 441-8560 (JP)
(72) Inventor: Okamoto, Teruhisa, Toyohashi-shi, Aichi (JP); Okitsu, Yuichi, Toyohashi-shi, Aichi (JP)
(74) Representative: Prechtel, Jörg

(57) **Abstract**

[SUBJECT] To provide an electric power unit for a vehicle, which requires small numbers of parts and assembly processes and which is also capable of reducing the weight and securing the stiffness of a transmission case.

[MEANS FOR SOLUTION] A second gear case portion 22 housing a secondary reduction gear train 14 is provided integrally continuous to a rear end of a shaft case portion 21 housing a propeller shaft 11. A first opening portion 23 for inserting the propeller shaft 11 and a drive gear 17 of the secondary reduction gear train 14 and for attaching a first bearing 33 supporting a rear portion of the propeller shaft 11 is provided in a front end of the shaft case portion 21. In addition, a second opening portion 24 for inserting a driven gear 18 of the secondary reduction gear train 14 and a rear axle holder 48 holding a bearing 47 supporting a rear axle 12 is provided in one side portion of the second gear case portion 22.

## Description

### [TECHNICAL FIELD]

The present invention relates to an improvement of an electric power unit for a vehicle comprising: an electric motor; a propeller shaft arranged in parallel with a rotor shaft of the electric motor; a rear axle arranged perpendicular to the propeller shaft and configured to drive a rear wheel of a vehicle; a primary reduction gear train configured to transmit an output of the rotor shaft to a front portion of the propeller shaft while reducing a speed of the output; a secondary reduction gear train configured to transmit an output of the propeller shaft from a rear portion of the propeller shaft to the rear axle while reducing a speed of the output; and a transmission case supporting the electric motor and housing the propeller shaft, the primary reduction gear train, and the secondary reduction gear train, the transmission case being attached to a vehicle-body frame of the vehicle in such a manner as to be swingable in an up-down direction.

### [BACKGROUND ART]

Such an electric power unit for a vehicle is already known as disclosed in Patent Documents 1 and 2 below.

### [PRIOR ART DOCUMENT]

### [PATENT DOCUMENT]

[Patent Document 1] Japanese Patent Application Laid-open No. 5-105160
[Patent Document 2] Japanese Patent Application Laid-open No. 5-213253

### [SUMMARY OF THE INVENTION]

### [PROBLEM TO BE SOLVED BY THE INVENTION]

In a conventional electric power unit for a vehicle, a transmission case is divided into a shaft case portion housing a propeller shaft and a gear case portion housing a secondary reduction gear train, and further, the gear case portion is divided into three parts: a body portion surrounding the secondary reduction gear train; a cover portion supporting an inner end portion of a rear axle with a bearing; and an axle holder supporting a middle portion of the rear axle with a bearing. When the body portion of the gear case portion is joined to the shaft case portion, the propeller shaft and a drive gear are joined to each other with a joint inside the shaft case portion. Such electric power unit requires large numbers of parts and assembly processes, which makes it difficult to reduce the product cost and which also leads to a reduction in stiffness of the transmission case due to the division between the shaft case portion and the gear case portion as well as the division of the gear case into the three parts. If the thickness of each portion of the transmission case is increased to make up for the reduction in stiffness, the weight of the electric power unit is increased consequently.

The present invention has been made in view of the aforementioned circumstances, and an object of the present invention is to provide the electric power unit for a vehicle, which requires small numbers of parts and assembly processes, and which is also capable of reducing the weight and securing the stiffness of a transmission case.

### [MEANS TO SOLVE THE PROBLEMS]

In order to achieve the object, according to a first feature of the present invention, there is provided an electric power unit for a vehicle comprising: an electric motor; a propeller shaft arranged in parallel with a rotor shaft of the electric motor; a rear axle arranged perpendicular to the propeller shaft and configured to drive a rear wheel of a vehicle; a primary reduction gear train configured to transmit an output of the rotor shaft to a front portion of the propeller shaft while reducing a speed of the output; a secondary reduction gear train configured to transmit an output of the propeller shaft from a rear portion of the propeller shaft to the rear axle while reducing a speed of the output; and a transmission case supporting the electric motor and housing the propeller shaft, the primary reduction gear train, and the secondary reduction gear train, the transmission case being attached to a vehicle-body frame of the vehicle in such a manner as to be swingable in an up-down direction, characterized in that the transmission case includes: a first gear case portion supporting the electric motor and housing the primary reduction gear train; a shaft case portion provided continuous to a rear portion of the first gear case portion and housing the propeller shaft; and a second gear case portion provided integrally continuous to a rear portion of the shaft case portion and housing the secondary reduction gear train, the secondary reduction gear train includes: a drive gear fixedly provided to the propeller shaft; and a driven gear fixedly provided to the rear axle and meshing with the drive gear, a first opening portion for inserting the propeller shaft and the drive gear into the shaft case portion and for attaching a first bearing to the shaft case portion or the second gear case portion is provided in a front portion of the shaft case portion, the first bearing supporting the propeller shaft while being adjacent to the drive gear, a second opening portion for inserting the driven gear into the second gear case portion and for attaching a rear axle holder holding a bearing supporting the rear axle is provided in one side portion of the second gear case portion, and the shaft case portion and the second gear case portion are integrally formed into a single part.

Further, according to a second feature of the present invention, in addition to the first feature, a bearing holder holding a second bearing supporting the front portion of the propeller shaft is attached to the first opening portion.

Moreover, according to a third feature of the present invention, in addition to the second feature, the first gear case portion is separably joined to a front end of the shaft case portion, and the bearing holder is formed integrally with the first gear case portion.

Furthermore, according to a fourth feature of the present invention, in addition to the first feature, a second bearing supporting the front portion of the propeller shaft is attached to a front portion of the first gear case portion, the front portion supporting the electric motor.

Furthermore, according to a fifth feature of the present invention, in addition to any one of the first to fourth features, the first gear case portion includes: a front case half supporting the electric motor; and a rear case half separably joined to a rear end of the front case half and being continuous to a front end of the shaft case portion.

Furthermore, according to a sixth feature of the present invention, in addition to the first feature, the propeller shaft and the drive gear of the secondary reduction gear train are integrally formed into a single part.

Furthermore, according to a seventh feature of the present invention, in addition to the first feature, the rear axle and the driven gear of the secondary reduction gear train are integrally formed into a single part.

Furthermore, according to an eighth feature of the present invention, in addition to any one of the first to seventh features, the transmission case is made of an A1 alloy, the propeller shaft is made of steel, a drive gear and a driven gear included in the primary reduction gear train are a spur gear or a helical gear, a difference in thermal expansion in a longitudinal direction in the transmission case and the propeller shaft is absorbed by meshing portions of the drive gear and the driven gear.

Further, according to a ninth feature of the present invention, in addition to any one of the first to eighth features, a rear end portion of a swingarm extending frontward from a lower portion of the transmission case and facing a lower surface of the electric motor is fixedly provided to the transmission case, and a front end portion of the swingarm is turnably coupled to the vehicle-body frame with a pivot.

Moreover, according to a tenth feature of the present invention, in addition to the ninth feature, the transmission case includes: a first gear case portion supporting the electric motor and housing the primary reduction gear train; and a shaft case portion coupled to a rear portion of the first gear case portion and housing the propeller shaft, and the rear end portion of the swingarm is fixedly provided to a lower portion of the first gear case portion.

Furthermore, according to an eleventh feature of the present invention, in addition to the ninth or tenth feature, an arm attachment portion is formed on a lower portion of the transmission case, and the rear end portion of the swingarm is detachably coupled to the arm attachment portion.

Furthermore, according to a twelfth feature of the present invention, in addition to the tenth feature, the first gear case portion includes: a front case half supporting the electric motor; and a rear case half separably joined to a rear end of the front case half and being continuous to a front end of the shaft case portion, and the swingarm is formed integrally on one of the front case half and the rear case half.

Furthermore, according to a thirteenth feature of the present invention, in addition to the tenth feature, the first gear case portion and the shaft case portion are separably coupled to each other, and the swingarm is formed integrally on the first gear case portion.

Furthermore, according to a fourteenth feature of the present invention, in addition to any one of the ninth to thirteenth features, the swingarm includes: a pair of left and right pivot boss portions supported by the pivot; and a cross member portion integrally coupling rear portions of the pivot boss portions; and a pair of left and right arm portions protruding rearward from the cross member portion and fixedly provided to the transmission case, and a reinforcement rib expanding in a horizontal direction between the arm portions and the cross member portion and facing the lower surface of the electric motor is formed.

Furthermore, according to a fifteenth feature of the present invention, in addition to the first feature, the electric motor is arranged such that an axis of the rotor shaft is located above an axis of the propeller shaft.

### [EFFECTS OF THE INVENTION]

With the first feature of the present invention, the transmission case includes: the first gear case portion supporting the electric motor and housing the primary reduction gear train; the shaft case portion provided continuous to the rear portion of the first gear case portion and housing the propeller shaft; and the second gear case portion provided integrally continuous to the rear portion of the shaft case portion and housing the secondary reduction gear train, the secondary reduction gear train includes: the drive gear fixedly provided to the propeller shaft; and the driven gear fixedly provided to the rear axle and meshing with the drive gear, the first opening portion for inserting the propeller shaft and the drive gear into the shaft case portion and for attaching the first bearing to the shaft case portion or the second gear case portion is provided in the front portion of the shaft case portion, the first bearing supporting the propeller shaft while being adjacent to the drive gear, the second opening portion for inserting the driven gear into the second gear case portion and for attaching the rear axle holder holding the bearing supporting the rear axle is provided in one side portion of the second gear case portion, and the shaft case portion and the second gear case portion are integrally formed into a single part. Accordingly, it is possible to easily mount the propeller shaft and the secondary reduction gear train to the transmission case from the first and second opening portions while enabling integration of the propeller shaft and the drive gear as well as integration of the shaft case portion and the second gear case portion. Moreover, the integration of the shaft case portion and the second gear case portion increases the stiffness of the transmission case, and thus makes it possible to reduce the thickness, and further the weight, of the transmission case. In addition, the integration of the shaft case portion and the second gear case portion as well as the integration of the propeller shaft and the drive gear reduce the number of parts, and make it possible to reduce the cost, together with the integral forming of the shaft case portion and the second gear case portion.

With the second feature of the present invention, the bearing holder holding the second bearing supporting the front portion of the propeller shaft is attached to the first opening portion. Accordingly, the supporting of the propeller shaft can be completed within the shaft case portion, making it possible not only to easily perform the subsequent assembling of the primary reduction gear train, but also to easily secure the accuracy in coaxiality of the first and second bearings.

With the third feature of the present invention, the first gear case portion and the shaft case portion are separated from each other. Accordingly, the shape of each portion is simplified, and thus can be easily formed. Moreover, the integration of the first gear case portion and the bearing holder makes it possible to suppress an increase in the number of parts.

With the fourth feature of the present invention, the second bearing supporting the front end portion of the propeller shaft is attached to the front-side wall of the first gear case portion. Accordingly, the accuracy in the center distance between the rotor shaft and the propeller shaft is improved, and the mesh accuracy of the primary reduction gear train is improved, and also it is possible to prevent the inclination of the driven gear of the primary reduction gear train. In addition, the support stiffness for the propeller shaft can be enhanced by maximizing the distance between the first and second bearings, which support the propeller shaft.

With the fifth feature of the present invention, the first gear case portion includes: the front case half supporting the electric motor; and the rear case half separably joined to the rear end of the front case half and being continuous to the front end of the shaft case portion. Accordingly, when the specifications of the electric motor are changed, only the design of the front case half, which has a simple shape, needs to to be changed in conformity with the change in the specifications, and the design of the transmission case does not need to be significantly changed. Therefore, the change in the specifications of the electric motor can be dealt with inexpensively.

With the sixth feature of the present invention, the propeller shaft and the drive gear of the secondary reduction gear train are integrally formed into a single part. Accordingly, it is possible not only to reduce the numbers of parts and assembly processes of the electric power unit, thereby reducing the cost, but also to increase the torque capacity.

With the seventh feature of the present invention, the rear axle and the driven gear of the secondary reduction gear train are integrally formed into a single part. Accordingly, it is possible not only to reduce the numbers of parts and assembly processes of the electric power unit, thereby reducing the cost, but also to increase the torque capacity.

With the eighth feature of the present invention, even if a difference in thermal expansion occurs in the longitudinal direction in the transmission case and the propeller shaft due to change in the environmental temperature, the difference is absorbed by a slight displacement of the meshing portions of the drive gear and the driven gear included in the primary reduction gear train in the axial direction. Therefore, it is possible to avoid unwanted stress in the transmission case or the support portion of the propeller shaft, thereby always securing smooth transmission of power.

With the ninth feature of the present invention, the rear end portion of the swingarm extending forward from the lower portion of the transmission case and facing the lower surface of the electric motor is fixedly provided to the transmission case, and the front end portion of the swingarm is turnably coupled to the vehicle-body frame with the pivot. Accordingly, when an increase or decrease in the wheel base or a change in the position of the electric motor is required due to a change in the specifications of the applied vehicle, it is possible to increase or decrease the center distance between the pivot and the rear axle or to change the position of the electric motor by only changing the length and shape of the swingarm. Therefore, there is no need to change the transmission case or transmission members and the like therein, and a new electric power unit for a vehicle can be provided relatively inexpensively. Furthermore, the swingarm extends forward from the lower portion of the transmission case and faces the lower surface of the electric motor, thereby serving also as a protection member for protecting the electric motor from flying stones from road surfaces.

With the tenth feature of the present invention, the transmission case includes: the first gear case portion supporting the electric motor and housing the primary reduction gear train; and the shaft case portion coupled to the rear portion of the first gear case portion and housing the propeller shaft, and the rear end portion of the swingarm is fixedly provided to the lower portion of the first gear case portion. Accordingly, fixedly providing the swingarm on the lower portion of the first gear case portion located at the foremost position in the transmission case makes it possible to reduce the length of the swingarm as much as possible, thereby reducing the weight of the electric power unit.

With the eleventh feature of the present invention, the arm attachment portion is formed on the lower portion of the transmission case, and the rear end portion of the swingarm is detachably coupled to the arm attachment portion. Accordingly, when the specifications of the applied vehicle are changed, only the swingarm needs to be replaced with one having difference length and shape. Therefore, a new electric power unit can be provided more inexpensively.

With the twelfth feature of the present invention, the first gear case portion includes: the front case half supporting the electric motor; and the rear case half separably joined to the rear end of the front case half and being continuous to the front end of the shaft case portion, and the swingarm is formed integrally on one of the front case half and the rear case half. Accordingly, the integration of the swingarm and the front case half, or of the swingarm and the rear case half, makes it possible to simplify the structure and enhance the coupling strength between the swingarm and the case half integrally continuous to the swingarm. In particular, since the front case half, which is separated from the rear case half, is a relatively small part, when the swingarm and the front case half are integrated, it is necessary only to change a die for forming the front case half, which is a small part, in accordance with changes in the length and shape of the swingarm. The cost for the change is relatively inexpensive, which can contribute to a reduction in the cost of a new electric power unit.

With the thirteenth feature of the present invention, the first gear case portion and the shaft case portion are separably coupled to each other, and the swingarm is formed integrally on the first gear case portion. Accordingly, the integration of the first gear case portion and the swingarm makes it possible to simplify the structure and enhance the coupling strength between the swingarm and the first gear case portion. In addition, since the gear case portion, which is separated from the shaft case portion, is a relatively small part, even when a die for forming the gear case portion is changed in accordance with changes in the length and shape of the swingarm integral with the gear case portion, the cost for the change is relatively inexpensive, which can contribute to a reduction in the cost of a new electric power unit.

With the fourteenth feature of the present invention, the swingarm includes: the pair of left and right pivot boss portions supported by the pivot; the cross member portion integrally coupling the rear portions of the pivot boss portions; and the pair of left and right arm portions protruding rearward from the cross member portion and fixedly provided to the transmission case, and the reinforcement rib expanding in the horizontal direction between the arm portions and the cross member portion and facing the lower surface of the electric motor is formed between the arm portions and the cross member portion. Accordingly, it is possible to increase the facing area of the swingarm against the lower surface of the electric motor, thereby effectively protecting the electric motor while increasing the stiffness and reducing the weight of the swingarm.

With the fifteenth feature of the present invention, the electric motor is arranged such that the axis of the rotor shaft is located above the axis of the propeller shaft. Accordingly, it is possible to secure a sufficient height of the electric motor from the ground, making unlikely that mud water and dirt scattering from the road surface are attached to the electric motor.

### [BRIEF DESCRIPTION OF THE DRAWINGS]

[FIG. 1] FIG. 1 is a side view of a two-wheeled motor vehicle according to a first embodiment of the present invention.
[FIG. 2] FIG. 2 is a plan view of an essential portion of the two-wheeled motor vehicle.
[FIG. 3] FIG. 3 is a front view of an electric power unit in the two-wheeled motor vehicle as seen in a direction of an arrow 3 in FIG. 1.
[FIG. 4] FIG. 4 is a bottom view of the two-wheeled motor vehicle.
[FIG. 5] FIG. 5 is an enlarged sectional view taken along a line 5-5 in FIG. 1.
[FIG. 6] FIG. 6 is an enlarged sectional view taken along a line 6-6 in FIG. 1.
[FIG. 7] FIG. 7 is a perspective view of a swingarm as seen from above.
[FIG. 8] FIG. 8 is a perspective view of the swingarm as seen from below.
[FIG. 9] FIG. 9 is a perspective view showing a state where the swingarm is attached to adjacent members.
[FIG. 10] FIG. 10 is a view corresponding to FIG. 5 and showing a second embodiment of the present invention.
[FIG. 11] FIG. 11 is a view corresponding to FIG. 5 and showing a third embodiment of the present invention.
[FIG. 12] FIG. 12 is a view corresponding to FIG. 5 and showing a fourth embodiment of the present invention.
[FIG. 13] FIG. 13 is a view corresponding to FIG. 5 and showing a fifth embodiment of the present invention.
[FIG. 14] FIG. 14 is a view corresponding to FIG. 5 and showing a sixth embodiment of the present invention.
[FIG. 15] FIG. 15 is a side view of an essential portion of a two-wheeled motor vehicle, showing a seventh embodiment of the present invention.
[FIG. 16] FIG. 16 is a view corresponding to FIG. 5 and showing an eighth embodiment of the present invention.
[FIG. 17] FIG. 17 is a side view of an essential portion of a two-wheeled motor vehicle, showing the eighth embodiment of the present invention.
[FIG. 18] FIG. 18 is a side view of an essential portion of a two-wheeled motor vehicle, showing a ninth embodiment of the present invention.

### [MODES FOR CARRYING OUT THE INVENTION]

Embodiments of the present invention will be described below on the basis of the attached drawings.

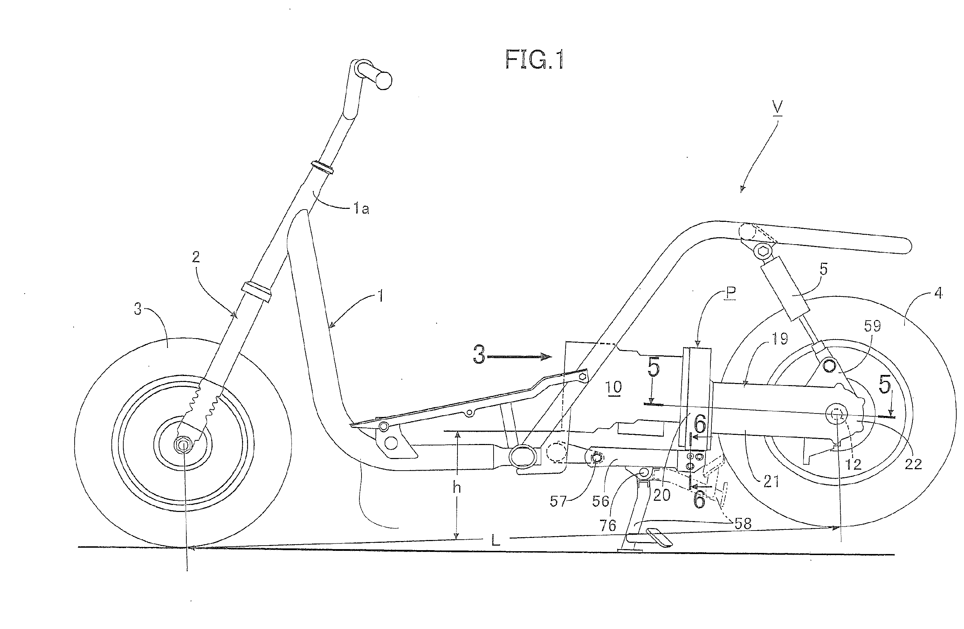

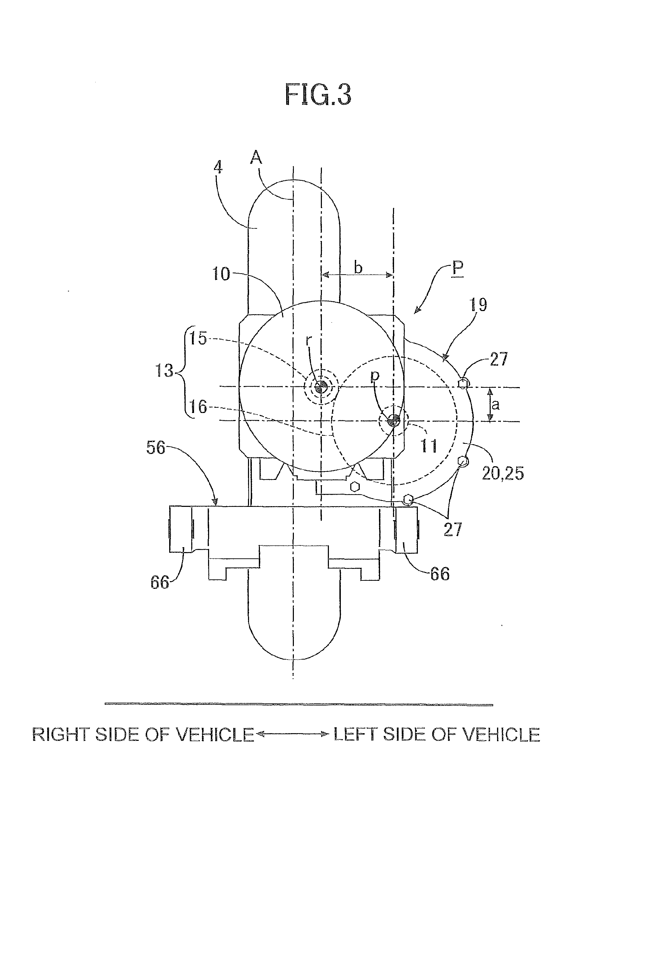

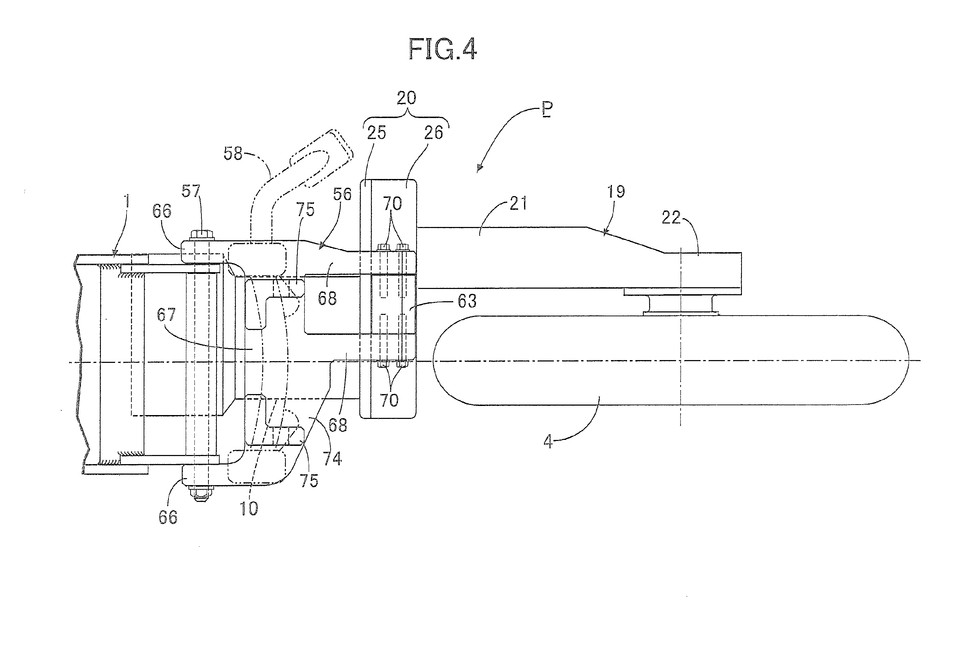

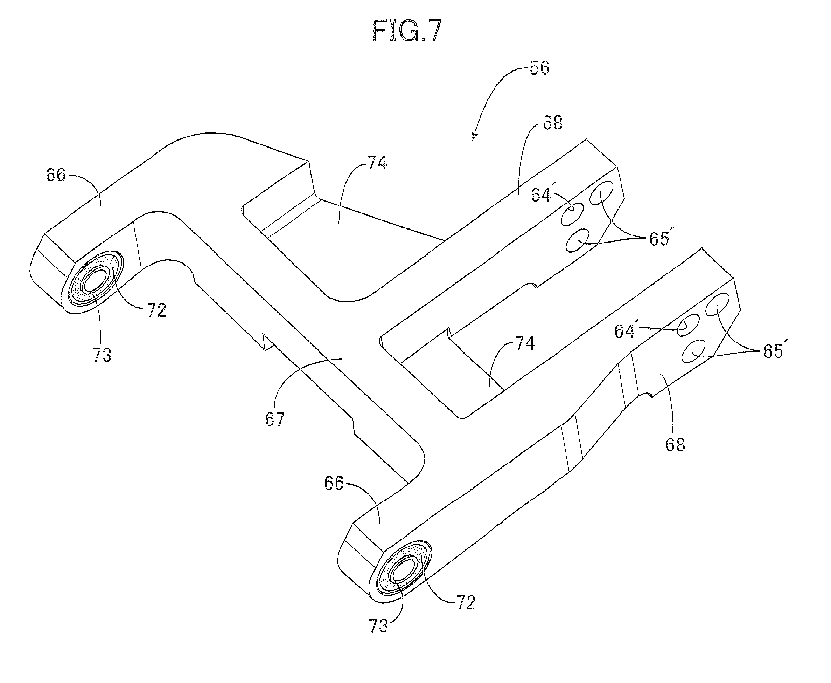

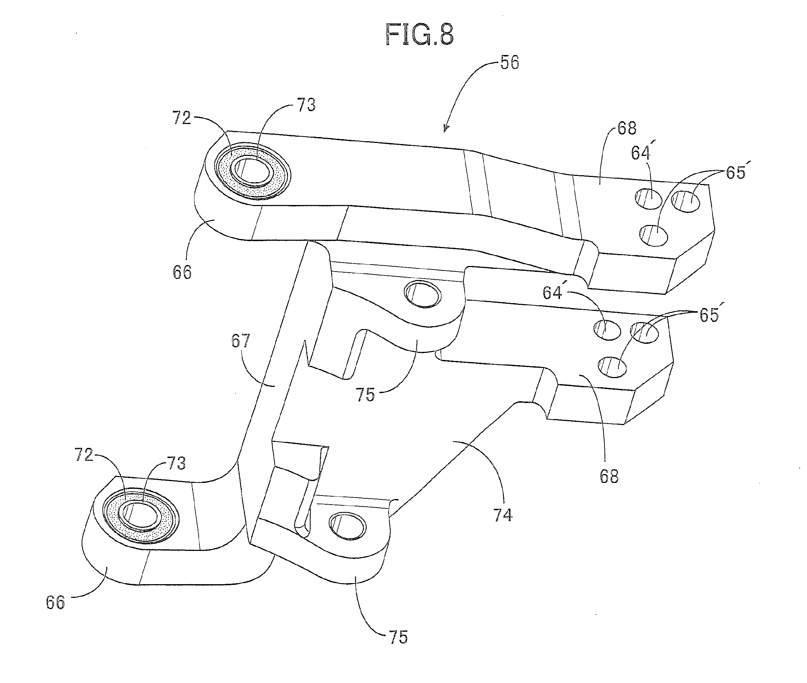

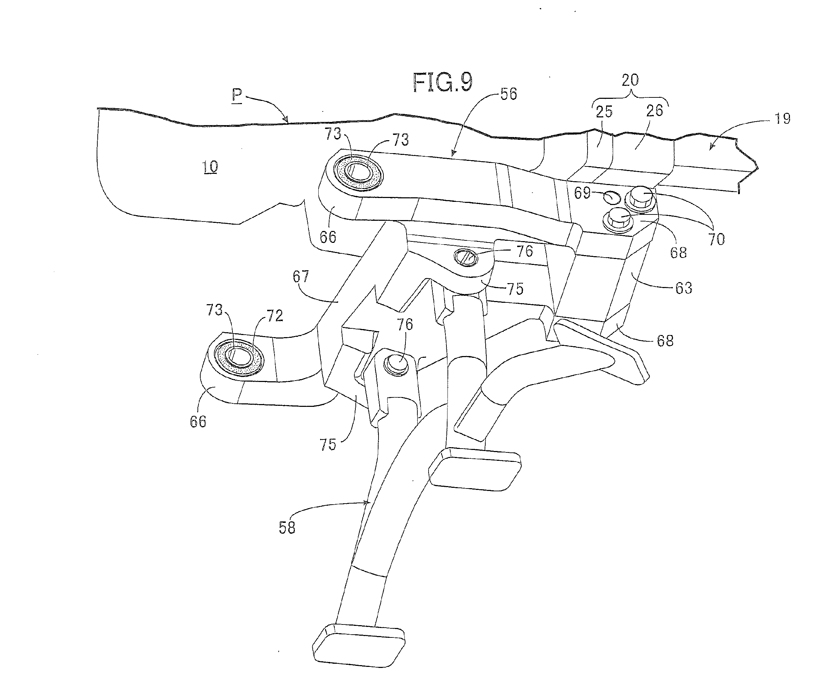

First of all, a first embodiment of the present invention shown in FIGS. 1 to 9 will be described. In FIGS. 1 to 4, a scooter-type two-wheeled motor vehicle V as a vehicle includes: a vehicle-body frame 1; a front fork 2 steerably coupled to a head pipe 1a at a front end portion of the vehicle-body frame 1 and supporting a front wheel 3; and an electric power unit P attached to a rear lower portion of the vehicle-body frame 1 with a pivot 57 in such a manner as to be swingable in an up-down direction, and supporting and driving a rear wheel 4. A cushion unit 5 for cushioning the up-down swinging of the electric power unit P is interposed between the electric power unit P and the vehicle-body frame 1.

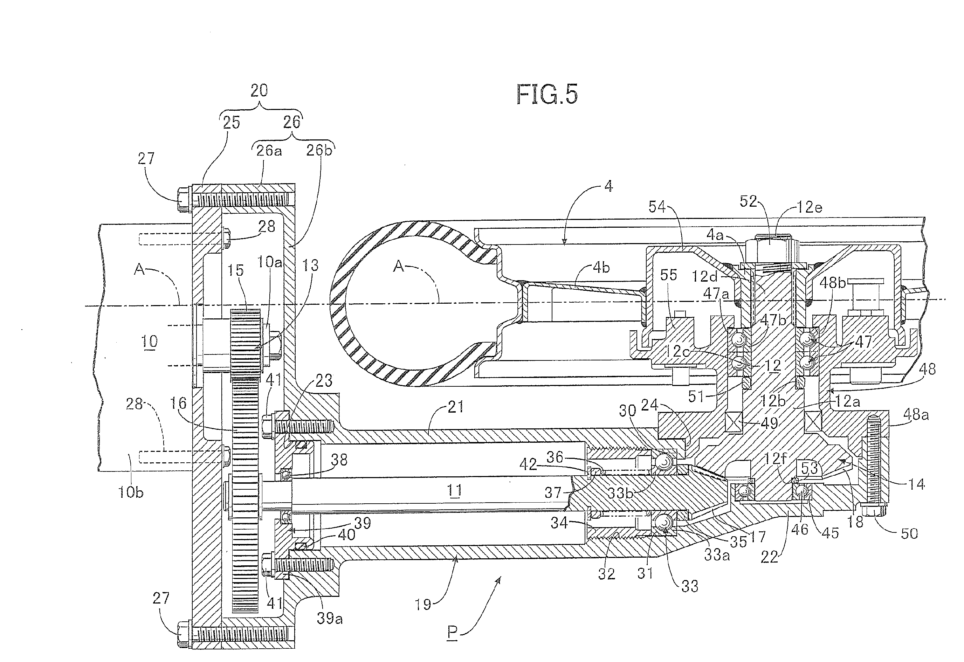

As shown in FIG. 5, the electric power unit P includes: an electric motor 10 arranged such that a rotor shaft 10a thereof extends in a front-rear direction of the two-wheeled motor vehicle V; a propeller shaft 11 arranged in parallel with the rotor shaft 10a of the electric motor 10; a rear axle 12 arranged perpendicular to and in parallel with the propeller shaft 11; a primary reduction gear train 13 for transmitting an output of the rotor shaft 10a to the propeller shaft 11 while reducing a speed of the output; a secondary reduction gear train 14 for transmitting an output of the propeller shaft 11 to the rear axle 12 while reducing a speed of the output; and a transmission case 19 for supporting the electric motor 10 and housing the primary reduction gear train 13, the propeller shaft 11, and the secondary reduction gear train 14.

The primary reduction gear train 13 includes: a spur drive gear 15 fixedly attached to a rear end portion of the rotor shaft 10a; and a spur driven gear 16 fixedly attached to a front end portion of the propeller shaft 11 to mesh with the spur drive gear 15.

The secondary reduction gear train 14 includes: a bevel drive gear 17 formed integrally on a rear end portion of the propeller shaft 11; and a bevel driven gear 18 formed integrally on the rear axle 12 to mesh with the bevel drive gear 17. The propeller shaft 11 and the bevel drive gear 17 are formed into a single part by forging, and the rear axle 12 and the bevel driven gear 18 are also formed into a single part by forging.

The transmission case 19 includes: a first gear case portion 20 housing the primary reduction gear train 13; a shaft case portion 21 coupled to a rear portion of the first gear case portion 20 and housing the propeller shaft 11; and a second gear case portion 22 provided integrally continuous to a rear end of the shaft case portion 21 and housing the secondary reduction gear train 14. A first opening portion 23 opening toward the inside of the first gear case portion 20 is provided in a front end surface of the shaft case portion 21 while a second opening portion 24 opening toward the rear wheel 4 is provided in one side surface of the second gear case portion 22.

In addition, the first gear case portion 20 includes: a lid-shaped front case half 25 supporting the electric motor 10; and a rear case half 26 separably joined to a rear end surface of the front case half 25. The rear case half 26 is formed in a box shape with a peripheral wall 26a surrounding the primary reduction gear train 13 and a rear-side wall 26b integrally coupling a rear end portion of the peripheral wall 26a to a front end portion of the shaft case portion 21. The front case half 25 is joined to a front end portion of the peripheral wall 26a with a bolt 27. Then, a stator 10b of the electric motor 10 is fixedly attached to a front end surface of the front case half 25 with a bolt 28. Here, the first gear case portion 20 is arranged to project to a front surface side of the rear wheel 4 from the shaft case portion 21 so that the rotor shaft 10a of the electric motor 10 is as close as possible to a vertical plane A including a center plane of rotation of the rear wheel 4.

The shaft case portion 21 and the second gear case portion 22 are formed integrally into a single part by die casting using an Al alloy as a material. At this time, it is desirable that the rear case half 26 is also formed integrally with the shaft case portion 21 and the like.

An annular front-facing shoulder portion 30, a first bearing housing 31, and a screw hole 32 are formed in a rear end portion of the shaft case portion 21 in this order from the rear side. An outer race 33a of a first ball bearing 33 for supporting a rear end portion of the propeller shaft 11 is fitted in the first bearing housing 31, and a ring nut 34 for clamping the outer race 33a with the front-facing shoulder portion 30 is screwed into the screw hole 32. In addition, a first shim 35 is interposed between an inner race 33b of the first ball bearing 33 and the bevel drive gear 17. A coil spring 36 for pressing and holding the bevel drive gear 17 against the inner race 33b with a predetermined set load via the first shim 35 is compressively provided between a front end surface of the inner race 33b and an annular retainer 37 locked to the propeller shaft 11 with a circlip 42 in front thereof.

The propeller shaft 11 with the bevel drive gear 17, the first ball bearing 33, the ring nut 34, the first shim 35, and the coil spring 36 are inserted into the shaft case portion 21 from the first opening portion 23. To enable the insertion, an outer diameter of the first ball bearing 33 is set to be smaller than an inner diameter of the first opening portion 23, and the maximum outer diameter of the bevel drive gear 17 is set to be smaller than an inner diameter of the front-facing shoulder portion 30 with which the outer race 33a of the first ball bearing 33 comes into contact.

Moreover, a bearing holder 39 for holding a second ball bearing 38 for supporting a front portion of the propeller shaft 11 is fitted to the first opening portion 23 with a sealing member 40 therebetween. A first attachment flange 39a of the bearing holder 39 is fastened to the rear-side wall 26b of the first gear case portion 20 with a bolt 41. Then, the spur driven gear 16 of the primary reduction gear train 13 is attached to the front end portion of the propeller shaft 11, protruding forward of the bearing holder 39. Note that the first and second ball bearings 33 and 38 are desirably provided with sealing to make oil-tight the insides of the first and second gear case portions 20 and 22.

On the other hand, a second bearing housing 45 is formed in an inner side wall of the second gear case portion 22, and a ball bearing 46 for supporting an inner end portion of the rear axle 12 is fitted in the second bearing housing 45. The ball bearing 46 and the rear axle 12 with the bevel driven gear 18 are inserted into the second gear case portion 22 from the second opening portion 24. To enable the insertion, the maximum outer diameter of the bevel driven gear 18 is set to be smaller than an inner diameter of the second opening portion 24.

In addition, one end portion of a rear axle holder 48 holding a pair of ball bearings 47, 47 for supporting the rear axle 12 is fitted to the second opening portion 24 with a sealing member 49 therebetween. A second attachment flange 48a of the rear axle holder 48 is fastened to an end surface of the second gear case portion 22 around the second opening portion 24 with a bolt 50.

An annular inside-facing shoulder portion 48b coming into contact with an outer end of an outer race 47a of an outer one of the pair of ball bearings 47, 47 is provided in the rear axle holder 48. On the other hand, a portion of the rear axle 12, protruding out of the second gear case portion 22, includes, from the bevel driven gear 18 side: a large-diameter shaft portion 12a; a small-diameter shaft portion 12c being continuous to an outer end of the large-diameter shaft portion 12a with a step portion 12b therebetween; a spline shaft portion 12d being continuous to an outer end of the small-diameter shaft portion 12c and having substantially the same diameter as that of the small-diameter shaft portion 12c; and a screw shaft portion 12e being continuous to an outer end of the spline shaft portion 12d and having a diameter smaller than that of the spline shaft portion 12d. The sealing member 49 is in tight contact with an outer periphery of the large-diameter shaft portion 12a, inner races 47b of the pair of ball bearings 47, 47 are fitted on the small-diameter shaft portion 12c, and a second shim 51 is interposed between the step portion 12b and the inner race 47b of the ball bearing 47 on the inner side. Further, a hub 4a of the rear wheel 4 is spline-fitted onto the spline shaft portion 12d, and a nut 52 is screwed onto the screw shaft portion 12e to press and hold the hub 4a against the step portion 12b, together with the inner races 47b of the pair of ball bearings 47, 47, and the second shim 51.

In addition, a third shim 53 is fitted between an inner race of the ball bearing 46 for supporting an inner end portion of the rear axle 12 and a step portion 12f of the rear axle 12 adjacent thereto. The thicknesses of the first, second, and third shims 35, 51, 53 are selected and determined in advance so that the backlash between the bevel drive gear 17 and the bevel driven gear 18 in mesh with each other is appropriately set.

A brake drum 54 coupling a spoke 4b and the hub 4a is provided in the rear wheel 4. A brake panel 55 facing an opening portion of the brake drum 54 is formed integrally in the rear axle holder 48. Brake shoes (not shown) for applying a braking force to an inner peripheral surface of the brake drum 54 by means of a friction are attached to the brake panel 55.

In FIGS. 1, 4, and 6 to 9, an arm attachment portion 63 protruding from a lower surface of the rear case half 26 is formed integrally on the rear case half 26 of the first gear case portion 20. A rear end portion of a swingarm 56 extending forward of the arm attachment portion 63 and facing a lower surface of the electric motor 10 is detachably fixedly attached to the arm attachment portion 63. A front end portion of the swingarm 56 is turnably supported on a pivot 57 attached to a lower portion of a center of the vehicle-body frame 1 along a vehicle-width direction.

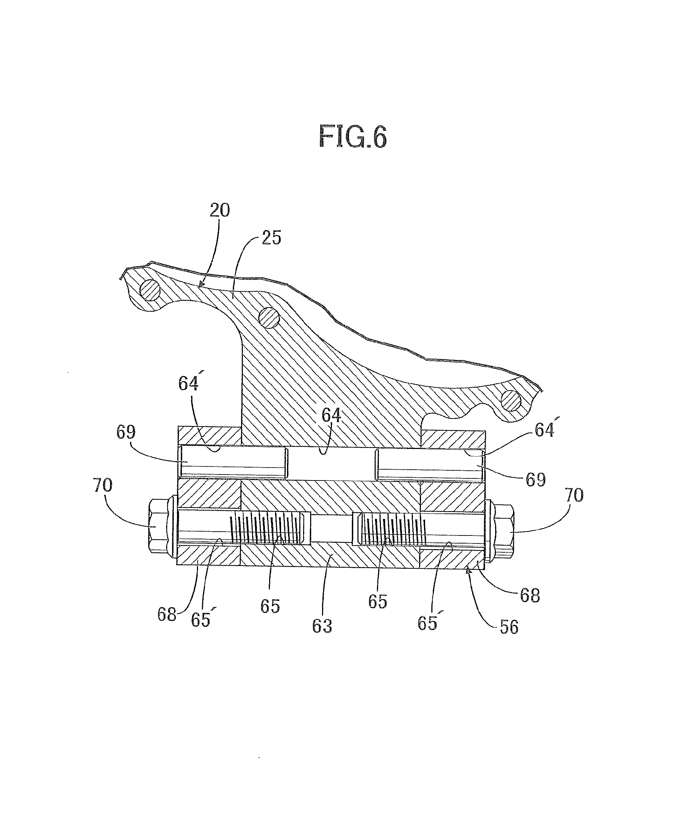

A structure of the swingarm 56 and the vicinity thereof will be described in detail by using FIGS. 6 to 9. First, a positioning hole 64 extending in the vehicle-width direction and a plurality of screw holes 65, 65 arranged in parallel with and around the positioning hole 64 are provided in the arm attachment portion 63.

On the other hand, the swingarm 56 includes: a pair of left and right pivot boss portions 66, 66; a cross member portion 67 integrally coupling rear portions of the pivot boss portions 66, 66; and a pair of left and right arm portions 68, 68 protruding rearward from the cross member portion 67. One of the arm portions 68 is arranged near the pivot boss portions 66, 66 on the same side while the other of the arm portions 68 is arranged at a middle portion of the cross member portion 67, such that the arm portions 68, 68 receive the arm attachment portion 63 therebetween. A positioning hole 64' arranged coaxially with the positioning hole 64 and a plurality of bolt holes 65', 65' corresponding to the plurality of screw holes 65, 65 are provided in the arm portions 68, 68. The arm portions 68, 68 are fixedly attached to the arm attachment portion 63 by press-fitting a knock-pin 69 into each corresponding positioning holes 64, 64' and by screwing and tightening a bolt 70 inserted through each bolt hole 65' into the corresponding screw hole 65.

In addition, a bearing collar 73 provided with a rubber bush 72 is mounted in each of the left and right pivot boss portions 66, 66, and the pivot 57 is fitted into the bearing collar 73. As a result, the swingarm 56 is supported on the pivot 57 in such a manner as to be swingable in the up-down direction while being cushioned.

In addition, a reinforcement rib 74 expanding between the arm portions 68, 68 and the cross member portion 67 in a horizontal direction and facing the lower surface of the electric motor 10 is formed on the swingarm 56. Moreover, a pair of left and right stand boss portions 75, 75 protruding from a lower surface of the swingarm 56 are formed near the left and right pivot boss portions 66, 66. A stand 58 is coupled to the stand boss portions 75, 75 with support shafts 76 in such a manner as to be capable of being stood and stored. The swingarm 56 is integrally formed by casting in the illustrated embodiment, but may be made of a steel plate.

In FIG. 1 again, a cushion bracket 59 protrudes integrally from an upper surface of the second gear case portion 22. A lower end portion of the cushion unit 5 having a rear end portion coupled to a rear portion of the vehicle-body frame 1 is coupled to the cushion bracket 59, such that the up-down swinging of the electric power unit P is cushioned by the cushion unit 5.

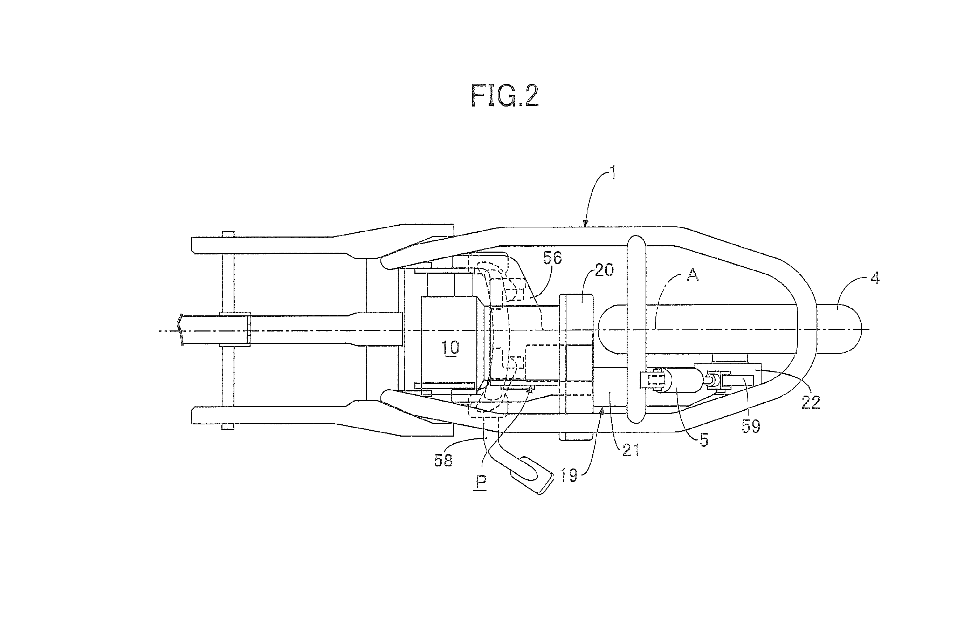

Accordingly, in the state where the electric power unit P is mounted on the two-wheeled motor vehicle V, the electric motor 10 and the first gear case portion 20 are arranged in front of the rear wheel 4 while the shaft case portion 21 and the second gear case portion 22 are arranged on one lateral side of the rear wheel 4, as shown in FIGS 2 to 4. Then, an axis r of the rotor shaft 10a of the electric motor 10 is arranged offset obliquely upward from an axis p of the propeller shaft 11 toward the center plane of rotation A of the rear wheel 4. Accordingly, the axis r of the rotor shaft 10a is offset by a distance b from the axis p of the propeller shaft 11 toward the center plane of rotation A of the rear wheel 4 and is offset by a distance a upward from the axis p of the propeller shaft 11.

Next, operations of the first embodiment will be described.

In the electric power unit P, when the electric motor 10 is activated, the output of the rotor shaft 10a is transmitted to the propeller shaft 11 while being reduced in speed by the primary reduction gear train 13, and is then transmitted to the rear axle 12 while being reduced in speed again by the secondary reduction gear train 14, to drive the rear wheel 4, thereby causing the two-wheeled motor vehicle V to travel.

In the electric power unit P, the transmission case 19 includes: the first gear case portion 20 supporting the electric motor 10 and housing the primary reduction gear train 13; the shaft case portion 21 coupled to the rear-side wall of the first gear case portion 20 and housing the propeller shaft 11; and the second gear case portion 22 provided integrally continuous to the rear portion of the shaft case portion 21 and housing the secondary reduction gear train 14. The secondary reduction gear train 14 includes: the bevel drive gear 17 fixedly provided to the rear end of the propeller shaft 11; and the bevel driven gear 18 fixedly provided to the rear axle 12 and meshing with the bevel drive gear 17. The first opening portion 23 for inserting the propeller shaft 11 and the bevel drive gear 17 into the shaft case portion 21 and for attaching the first ball bearing 33 supporting the rear portion of the propeller shaft 11 to the shaft case portion 21 is provided in the front end of the shaft case portion 21. In addition, the second opening portion 24 for inserting the bevel driven gear 18 into the second gear case portion 22, for attaching the ball bearing 46 supporting the inner end portion of the rear axle 12 to the second gear case portion 22, and for attaching the rear axle holder 48 holding the ball bearings 47, 47 supporting the middle portion of the rear axle 12 is provided in the one side portion of the second gear case portion 22. Accordingly, it is possible to easily mount the propeller shaft 11 and the secondary reduction gear train 14 to the transmission case 19 from the first and second opening portions 23, 24 while enabling integration of the propeller shaft 11 and the bevel drive gear 17 as well as integration of the shaft case portion 21 and the second gear case portion 22. Moreover, the integration of the shaft case portion 21 and the second gear case portion 22 increases the stiffness of the transmission case 19, and makes it possible to reduce the thickness, and further the weight, of the transmission case 19. In addition, the integration of the shaft case portion 21 and the second gear case portion 22 as well as the integration of the propeller shaft 11 and the bevel drive gear 17 reduce the number of parts, and make it possible to reduce the cost, together with the integral forming of the shaft case portion 21 and the second gear case portion 22 by casting.

In addition, the bearing holder 39 holding the second ball bearing 38 supporting the front portion of the propeller shaft 11 is attached to the first opening portion 23. Accordingly, the supporting of the propeller shaft 11 can be completed within the shaft case portion 21, making it possible not only to easily perform the subsequent assembling of the primary reduction gear train 13, but also to easily secure the accuracy in coaxiality of the first and second ball bearings 33, 38.

Moreover, the first gear case portion 20 includes: the rear case half 26 formed of the rear-side wall 26b coupled to the front end of the shaft case portion 21 and the peripheral wall 26a provided integrally continuous to the periphery of the rear-side wall 26b and surrounding the primary reduction gear train 13; and the front case half 25 separably joined to the front end of the peripheral wall 26a and supporting the electric motor 10. Accordingly, when the specifications of the electric motor 10 are changed, only the design of the front case half 25, which has a simple shape, needs to be changed in conformity with the change in the specifications, and the design of the transmission case 19 does not need to be significantly changed. Therefore, the change in the specifications of the electric motor 10 can be dealt with inexpensively. In this connection, forming the rear case half 26 integrally with the shaft case portion 21 makes it possible to reduce the division faces of the transmission case 19, and to increase the stiffness and reduce the number of parts of the transmission case 19.

In addition, the first gear case portion 20 is arranged to project to the front surface side of the rear wheel 4 from the shaft case portion 21, and the rotor shaft 10a of the electric motor 10 is located as close as possible to the vertical plane A including the center plane of rotation of the rear wheel 4. Accordingly, the electric motor 10, which is a heavy component, is located substantially immediately forward of the rear wheel 4, and is located closer to the pivot 57 which supports the swingarm 56 on the vehicle-body frame 1. This enhances the travelling stability of the vehicle and reduces the moment of inertia of the electric power unit P including the rear wheel 4 around the pivot 57 as much as possible, making it possible to reduce the load borne by the cushion unit 5.

Moreover, the propeller shaft 11 and the bevel drive gear 17 are integrally formed into a single part by forging or the like while the rear axle 12 and the bevel driven gear 18 are also integrally formed into a single part by forging or the like. Accordingly, it is possible not only to reduce the numbers of parts and assembly processes of the electric power unit P, thereby reducing the cost, but also to increase the torque capacity.

Further, the transmission case 19 is made of an AL alloy and the propeller shaft 11 is made of steel. The primary reduction gear train 13 includes the spur drive gear 15 and the spur driven gear 16. Accordingly, even if a difference in thermal expansion occurs in the longitudinal direction in the transmission case 19 and the propeller shaft 11 due to change in the environmental temperature, the difference is absorbed by a slight displacement of the meshing portions of the spur drive gear 15 and the spur driven gear 16 in the axial direction. Therefore, it is possible to avoid an occurrence of unwanted stress in the transmission case 19 or the support portion of the propeller shaft 11, thereby always securing smooth transmission of power.

Meanwhile, the rear end portion of the swingarm 56 extending forward from the lower portion of the transmission case 19 and facing the lower surface of the electric motor 10 is fixedly provided on the transmission case 19, and the front end portion of the swingarm 56 is turnably coupled to the vehicle-body frame 1 with the pivot 57. Accordingly, when an increase or decrease in the wheel base or a change in the position of the electric motor 10 is required due to a change in the specifications of the applied vehicle, it is possible to increase or decrease the center distance between the pivot 57 and the rear axle 12, that is, the wheel base L, or to change the position of the electric motor 10 by only changing the length and shape of the swingarm 56. Therefore, there is no need to change the transmission case 19 and the transmission members therein, and a new electric power unit P can be provided relatively inexpensively. Moreover, when the capacity of the electric motor 10 is changed, there also is no need to change the transmission case 19 and the transmission members therein.

At this time, fixedly providing the swingarm 56 on the lower portion of the first gear case portion 20 located at the foremost position in the transmission case 19 makes it possible to reduce the length of the swingarm 56 as much as possible, thereby reducing the weight of the electric power unit P.

Further, the arm attachment portion 63 is formed on the lower portion of the transmission case 19, and the rear end portion of the swingarm 56 is detachably coupled to the arm attachment portion 63. Accordingly, when the above-described specifications are changed, only the swingarm 56 needs to be replaced with one having difference length and shape. Therefore, a new electric power unit P can be provided more inexpensively.

Furthermore, the swingarm 56 extends forward from the lower portion of the transmission case 19 and faces the lower surface of the electric motor 10, thereby protecting the electric motor 10 from flying stones and protrusions on the road surface. In other words, the swingarm 56 serves also as a protection member for the electric motor 10.

In particular, the swingarm 56 includes: the pair of left and right pivot boss portions 66, 66 supported by the pivot 57; the cross member portion 67 integrally coupling the rear portions of the pivot boss portions 66, 66; and the pair of left and right arm portions 68, 68 protruding rearward from the cross member portion 67 and fixedly provided on the transmission case 19. The reinforcement rib 74 expanding in the horizontal direction between the arm portions 68, 68 and the cross member portion 67 and facing the lower surface of the electric motor 10 are formed. Accordingly, it is possible to increase the facing area of the swingarm 56 against the lower surface of the electric motor 10, thereby effectively protecting the electric motor 10 while increasing the stiffness and reducing the weight of the swingarm 56.

In addition, the axis r of the rotor shaft 10a of the electric motor 10 is arranged offset from the axis p of the propeller shaft 11, which is arranged along the front-rear direction of the two-wheeled motor vehicle V on one side of the rear wheel 4, toward the center plane of rotation A of the rear wheel 4. Accordingly, the center of gravity of the electric power unit P can be arranged as close as possible to the center plane of rotation A of the rear wheel 4, thereby enhancing the travelling stability of the two-wheeled motor vehicle V. Further, the axis r of the rotor shaft 10a of the electric motor 10 is arranged offset upward from the axis p of the propeller shaft 11. Accordingly, a sufficient height h of the electric motor 10 from the ground can be secured, making unlikely that mud water and dirt scattering from the road surface are attached to the electric motor 10.

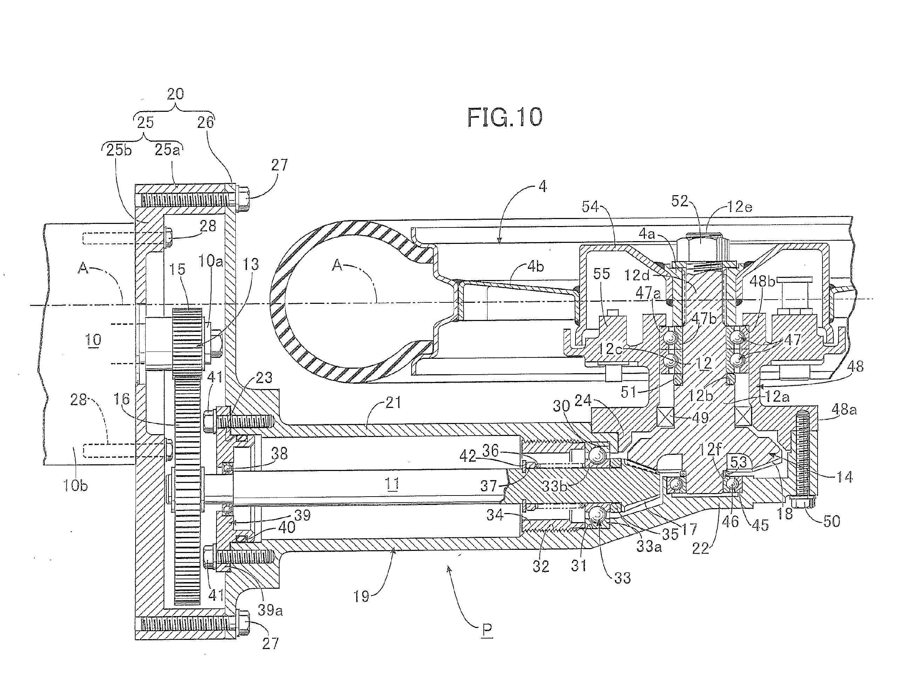

Next, a second embodiment of the present invention, which is shown in FIG. 10, will be described.

The second embodiment is such that the front case half 25 included in the first gear case portion 20 includes a peripheral wall 25a and a front-side wall 25b formed integrally on the front end of the peripheral wall 25a. The lid-shaped rear case half 26 is provided integrally continuous to the shaft case portion 21 and separably fixedly provided to the rear end of the peripheral wall 25a with the bolt 27. The other configurations are the same as those of the first embodiment, and the portions corresponding to those of the first embodiment are denoted by the same reference numerals in FIG. 10, and the same description will be omitted.

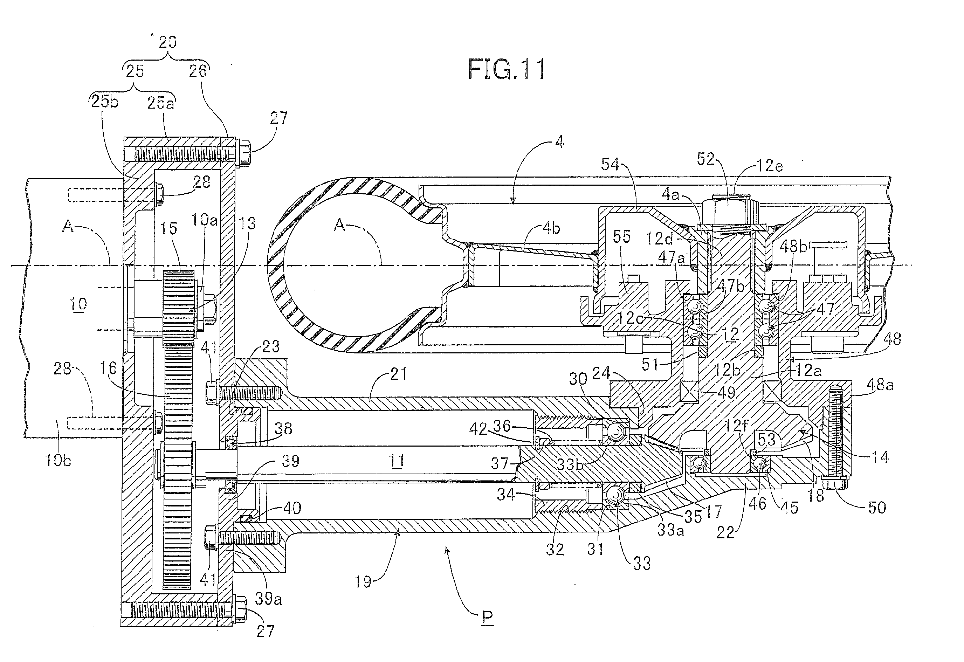

Next, a third embodiment of the present invention, which is shown in FIG. 11, will be described.

The third embodiment is such that the lid-shaped rear case half 26 of the first gear case portion 20 is joined to the front end surface of the shaft case portion 21 with the bolt 41, and then the bearing holder 39 is integrally formed in the rear case half 26. The other configurations are the same as those of the second embodiment, and the portions corresponding to those of the second embodiment are denoted by the same reference numerals in FIG. 11, and the same description will be omitted.

According to the third embodiment, the first gear case portion 20 and the shaft case portion 21 are separated from each other. Accordingly, the shape of each portion is simplified, and thus can be easily formed. Moreover, the integration of the first gear case portion 20 and the bearing holder 39 makes it possible to suppress an increase in the number of parts.

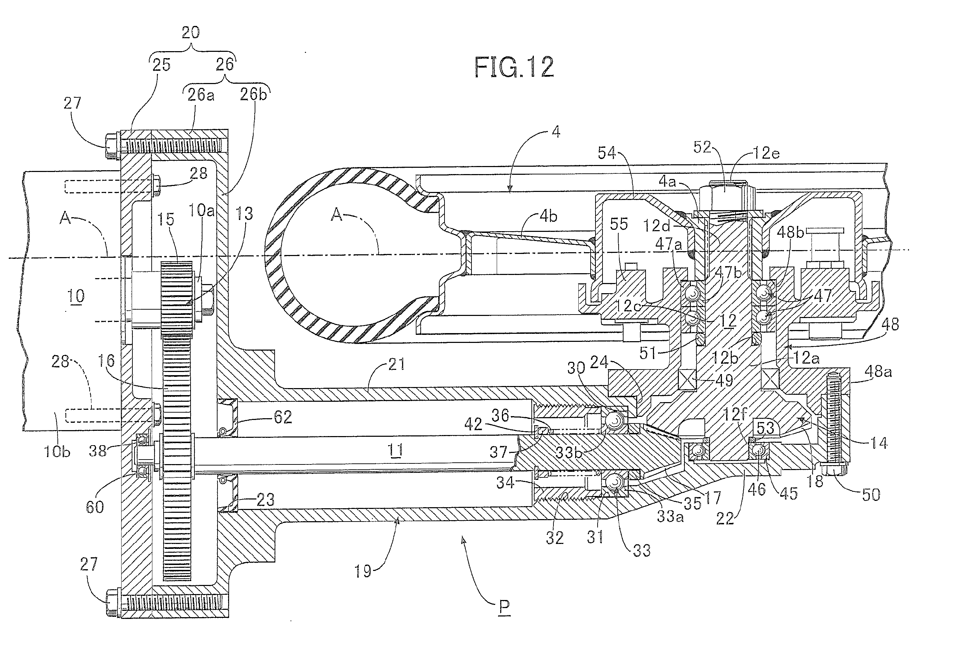

Next, a fourth embodiment of the present invention, which is shown in FIG. 12, will be described.

The fourth embodiment is such that the second ball bearing 38 supporting the front end portion of the propeller shaft 11 is attached to a bearing housing 60 formed in the lid-shaped front case half 25 of the first gear case portion 20. A sealing member 62 for preventing unwanted transfer of lubricating oil from the inside of the first gear case portion 20 to the shaft case portion 21 is attached to the first opening portion 23 of the shaft case portion 21. The other configurations are the same as those of the first embodiment, and the portions corresponding to those of the first embodiment are denoted by the same reference numerals in FIG. 12, and the same description will be omitted.

According to the fourth embodiment, the accuracy in the center distance between the rotor shaft 10a and the propeller shaft 11 is improved, and the mesh accuracy of the primary reduction gear train 13 is improved. In addition, since the support of the spur driven gear 16 of the primary reduction gear train 13 is established at the two sides, preventing the inclination of the spur driven gear 16. Further, the support stiffness for the propeller shaft 11 can be enhanced by maximizing the distance between the first and second ball bearings 33, 38, which support the propeller shaft 11.

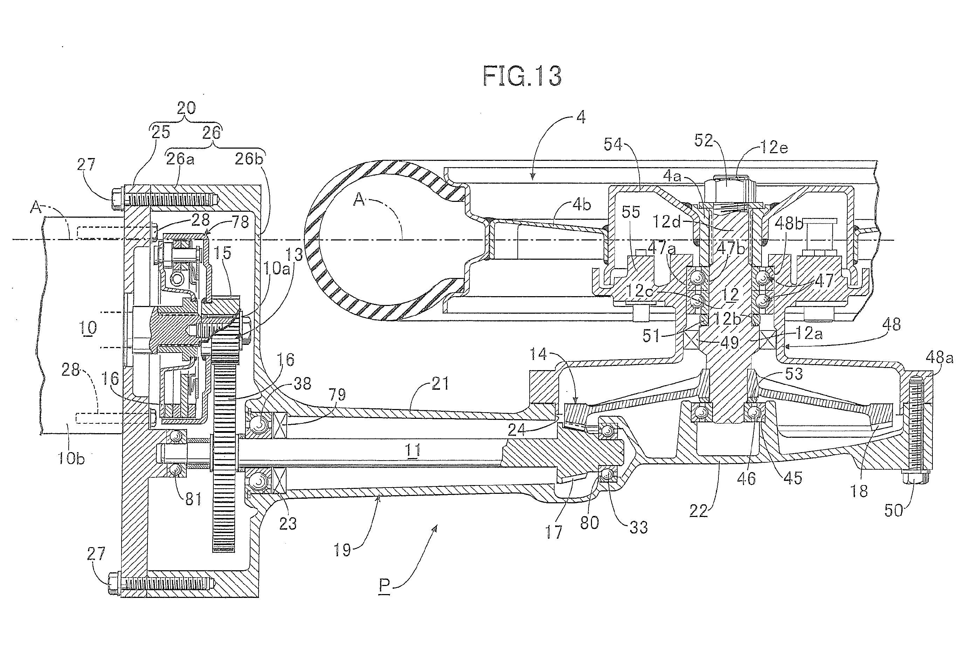

Next, a fifth embodiment of the present invention, which is shown in FIG. 13, will be described.

The fifth embodiment has substantially the same configuration as that of the first embodiment except: a point that a centrifugal clutch 78 to be connected in accordance with an increase in the number of revolutions of the rotor shaft 10a is interposed between the rotor shaft 10a of the electric motor 10 and the spur drive gear 15 of the primary reduction gear train 13; a point that the second ball bearing 38 supporting the front portion of the propeller shaft 11 and a sealing member 79 adjacent to the second ball bearing 38 are directly attached to the first opening portion 23 of the shaft case portion 21; a point that a thrust bearing 81 for receiving a thrust load received from the secondary reduction gear train 14 is interposed between the front case half 25 of the first gear case portion 20 and the front end portion of the propeller shaft 11; and a point that the rear end portion of the propeller shaft 11 is protruded from the rear end surface of the bevel drive gear 17 of the secondary reduction gear train 14, and the first ball bearing 33 supporting the rear end portion of the propeller shaft 11 is attached to a bearing housing 80 formed in the second gear case portion 22 and opening forward. The portions corresponding to those of the first embodiment are denoted by the same reference numerals in FIG. 13, and the same description will be omitted. In the fifth embodiment as well, the first ball bearing 33 supporting the rear end portion of the propeller shaft 11 is attached to the bearing housing 80 from the first opening portion 23 of the shaft case portion 21.

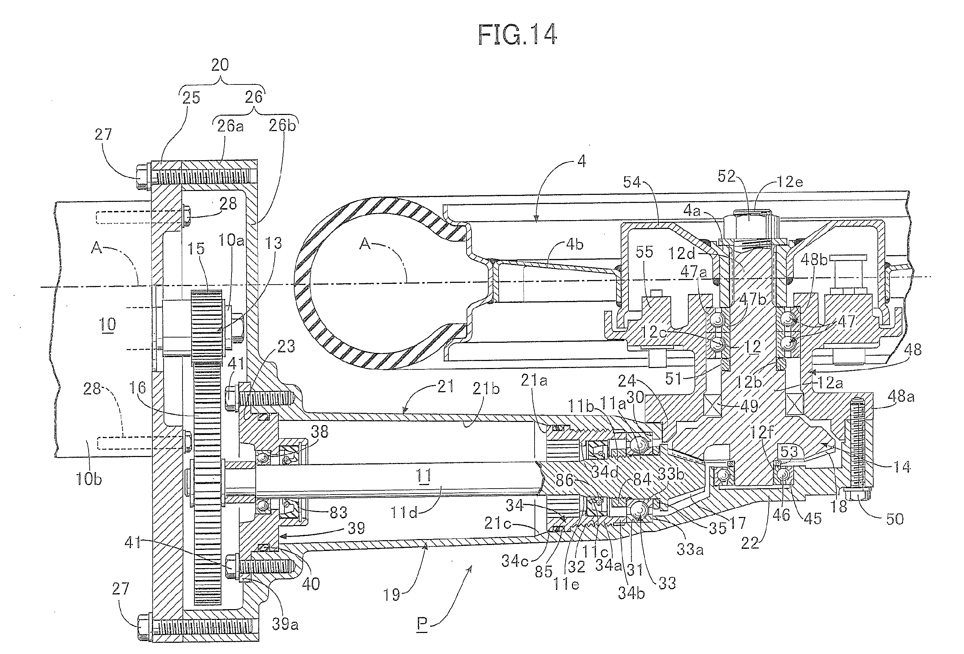

Next, a sixth embodiment of the present invention, which is shown in FIG. 14, will be described.

In the sixth embodiment, an oil seal 83 which makes a seal lip come into close contact with the outer peripheral surface of the propeller shaft 11 while being adjacent to the rear side of the second ball bearing 38 is attached to the bearing holder 39 in order to make oil-tight the inside of the first gear case portion 20. A nut 84 pressing the inner race 33b of the first ball bearing 33 against the front end surface of the bevel drive gear 17, together with the first shim 35, is screwed onto the propeller shaft 11 instead of the coil spring 36 of the first embodiment in order to fix the inner race 33b. Further, an O-ring 85, which comes into close contact with the inner peripheral surface of the rear portion of the shaft case portion 21, and an oil seal 86, which makes a seal lip come into close contact with the outer peripheral surface of the propeller shaft 11, are attached to the ring nut 34 in order to make oil-tight the inside of the second gear case portion 22.

In the above configuration, the ring nut 34 includes: a male screw portion 34a screwed into a female screw 21a of the shaft case portion 21; a holding tubular portion 34b which is provided continuous to a rear end of the male screw portion 34a, holds the outer race 33a of the first ball bearing 33, and has a diameter smaller than that of the male screw portion 34a; and a flange portion 34c which is provided continuous to a front end of the male screw portion 34a and has a diameter larger than that of the male screw portion 34a. The O-ring 85 is attached to an outer peripheral groove of the flange portion 34c. An annular protrusion 34d capable of holding a front end of the oil seal 86 is formed on an inner periphery of the ring nut 34. When the ring nut 34, to which the oil seal 86 is attached, is screwed into the screw hole 32, the annular protrusion 34d serves to push the oil seal 86 from the front to set the oil seal 86 onto a seal portion 11c, which will be described later, of the propeller shaft 11.

A bearing fit portion 11a onto which the inner race 33b of the first ball bearing 33 is fitted, a male screw portion 11b onto which the nut 84 is screwed, the seal portion 11c with which the seal lip of the oil seal 86 comes into close contact, and a long-shaft portion 11d which extends from the seal portion 11c toward the front, are formed on the propeller shaft 11 so as to make their diameters smaller in sequence. A tapered guide step portion 11e is provided between the seal portion 11c and the long-shaft portion 11d. Accordingly, since a diameter of the long-shaft portion 11d is smaller than an inside diameter of the oil seal 86, when the oil seal 86 attached to the ring nut 34 is set onto the seal portion 11c from a front end of the long-shaft portion 11d, it is possible to prevent the seal lip of the oil seal 86 from being damaged due to the long-shaft portion 11d. Furthermore, when attached to the seal portion 11c, the oil seal 86 is attached thereto while gradually increasing the diameter of the seal lip by the tapered guide step portion 11e. Accordingly, it is possible to attach easily the oil seal 86 to the seal portion 11c without damaging the seal lip.

Further, the screw hole 32 into which the male screw portion 34a of the ring nut 34 is screwed, a seal portion 21 a to which the flange portion 34c of the ring nut 34 is fitted and with which the O-ring 85 comes into close contact, and a hollow portion 21b having a draft angle are formed on an inner peripheral surface of the shaft case portion 21 so as to make their diameters larger in sequence. A tapered guide step portion 21c is provided between the seal portion 21a and the hollow portion 21b. Accordingly, when the male screw portion 34a of the ring nut 34 is screwed into the screw hole 32 of the shaft case portion 21, the male screw portion 34a can be smoothly screwed into the screw hole 32 without interfering with the hollow portion 21b and the seal portion 21a. Further, the O-ring 85 can also reach the seal portion 21a easily and accurately while being guided by the tapered guide step portion 21c, whereby preventing the O-ring 85 from being damaged.

With the use of the bearing holder 39, the ring nut 34, the oil seals 83, 86, and the like, lubricating oil is prevented from entering into the shaft case portion 21 from the first and second gear case portions 20, 22, and the inside of the shaft case portion 21 remains dry. Accordingly, it is possible to suppress the amount of use of lubricating oil in the transmission case 19 to the minimum extent by reserving the lubricating oil only in the first and second gear case portions 20, 22, and, furthermore, also possible to reduce oil level fluctuations of the lubricating oil in the first and second gear case portions 20, 22 at the time of increasing or decreasing the speed of the vehicle or of running up or down a slope.

The other configurations are the same as those of the first embodiment, and the portions corresponding to those of the first embodiment are denoted by the same reference numerals in FIG. 14, and the same description will be omitted.

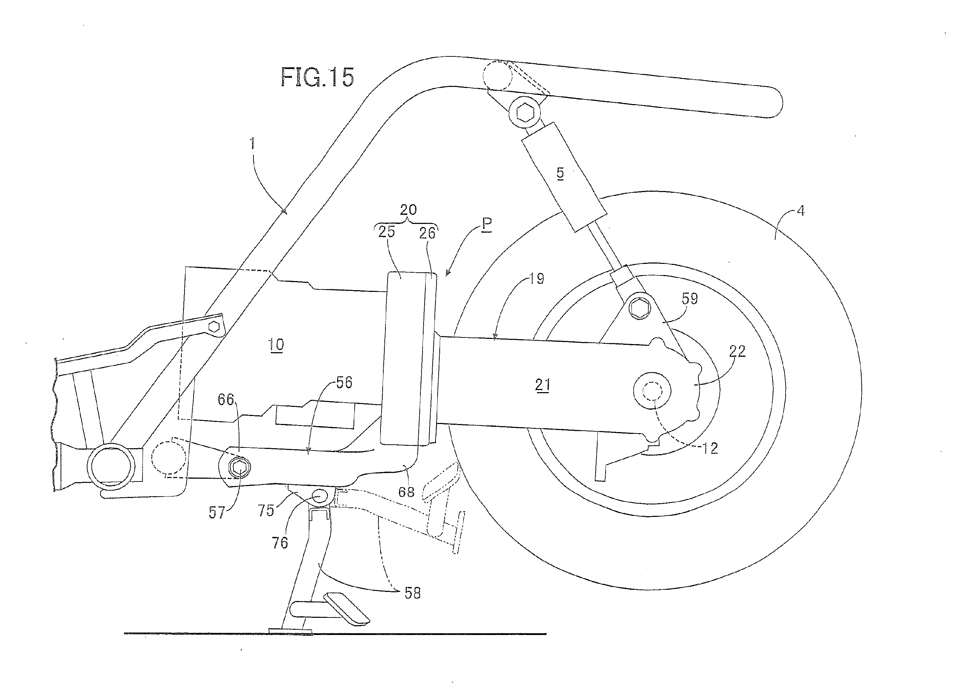

Next, a seventh embodiment of the present invention, which is shown in FIG. 15, will be described.

The seventh embodiment is such that the front case half 25 of the first gear case portion 20 is formed in a box shape and the rear case half 26 thereof is formed in a lid shape, and the swingarm 56 is formed integrally on the front case half 25 by casting, on the contrary to the first embodiment shown in FIG. 1 and FIG. 5. The other configurations are the same as those of the first embodiment, and the portions corresponding to those of the first embodiment are denoted by the same reference numerals in FIG. 15, and the same description will be omitted.

According to the seventh embodiment, the integration of the box-shaped front case half 25 with a high stiffness and the swingarm 56 makes it possible to simplify the structure and enhance the coupling strength between the swingarm 56 and the front case half 25. In addition, since the front case half 25 with the swingarm 56, which is separated from the rear case half 26, is a relatively small part, even when a die for forming the front case half 25 with the swingarm 56 is changed in accordance with changes in the length and shape of the swingarm 56, the cost for the change is relatively inexpensive, which can contribute to a reduction in the cost of a new electric power unit P.

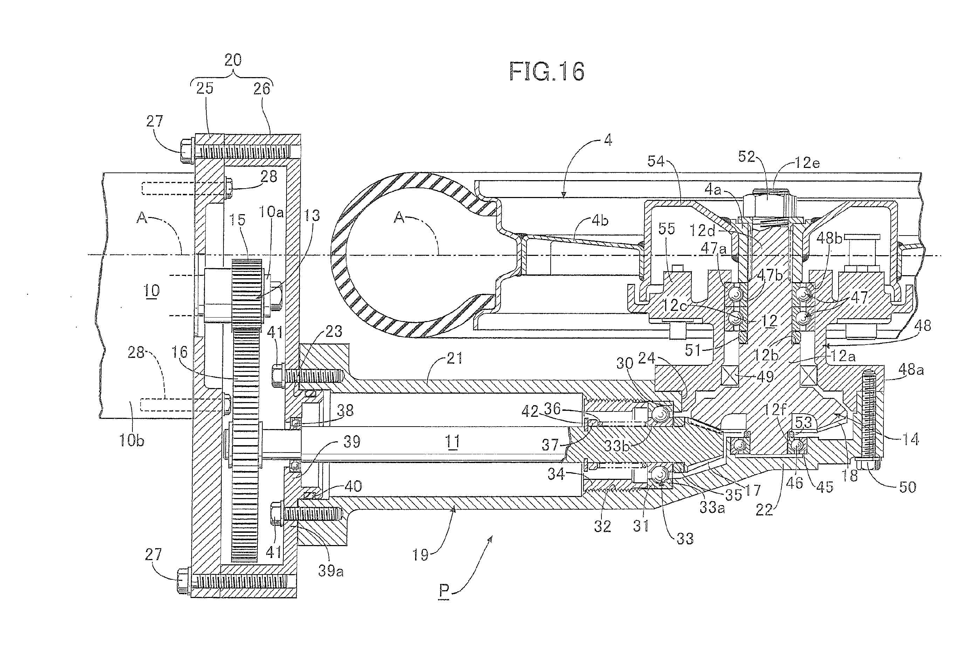

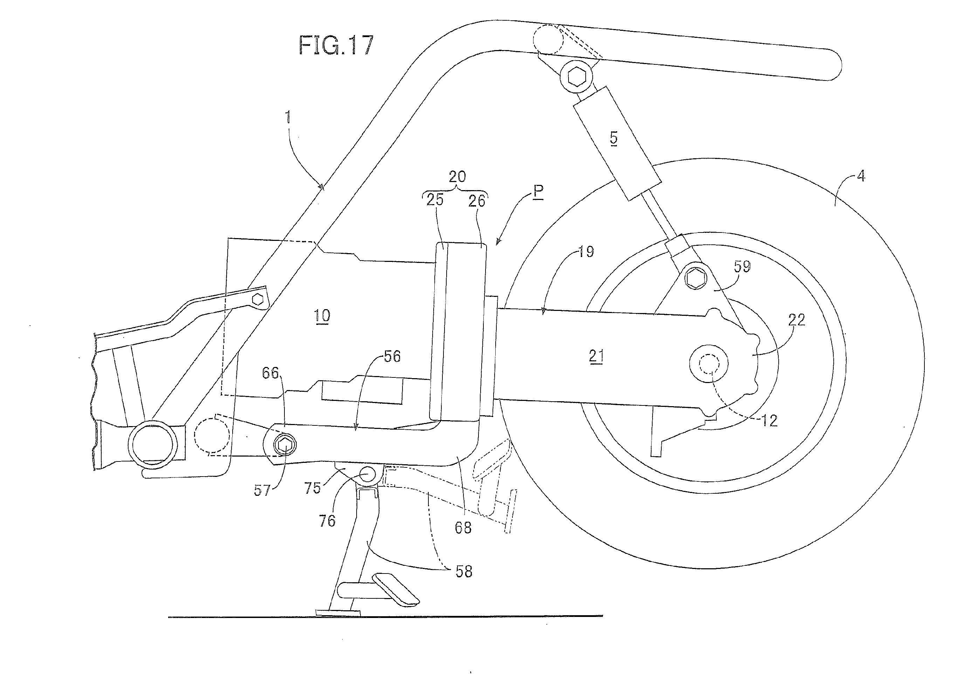

Next, an eighth embodiment of the present invention, which is shown in FIG. 16 and FIG. 17, will be described.

The eighth embodiment is such that the front case half 25 of the first gear case portion 20 is formed in a lid shape and the rear case half 26 thereof is formed in a box shape, the rear case half 26 is separably joined to the front end surface of the shaft case portion 21 with the bolt 41, and the bearing holder 39 and the swingarm 56 are formed integrally on the rear case half 26 by casting. The other configurations are the same as those of the first embodiment, and the portions corresponding to those of the first embodiment are denoted by the same reference numerals in FIG. 16 and FIG. 17, and the same description will be omitted.

In the eighth embodiment as well, the integration of the box-shaped rear case half 26 with a high stiffness and the swingarm 56 makes it possible to simplify the structure and enhance the coupling strength between the swingarm 56 and the rear case half 26. In addition, the rear case half 26 with the swingarm 56, which is separated from the shaft case portion 21, is a relatively small part. For this reason, when a die for forming the rear case half 26 with the swingarm 56 is changed due to changes in the length and shape of the swingarm 56, the cost for the change is relatively inexpensive, which can contribute to a reduction in the cost of a new electric power unit P.

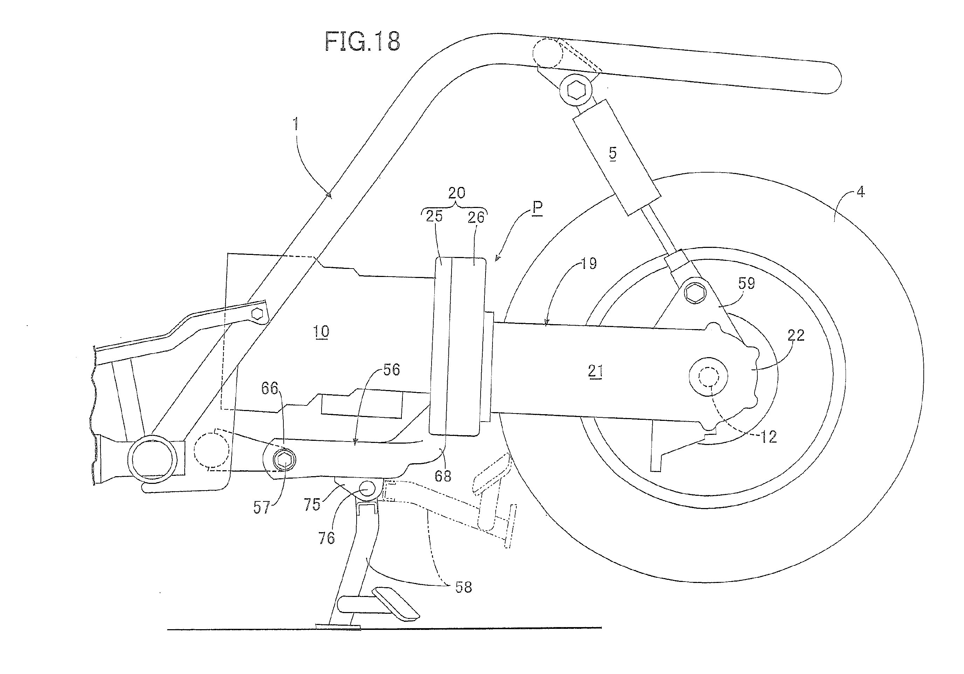

Lastly, a ninth embodiment of the present invention, which is shown in FIG. 18, will be described.

The ninth embodiment is such that the swingarm 56 is formed integrally on the lid-shaped front case half 25 of the first gear case portion 20 by casting. The other configurations are the same as those of the eighth embodiment of FIG. 17, and the portions corresponding to those of the eighth embodiment are denoted by the same reference numerals in FIG. 18, and the same description will be omitted.

According to the ninth embodiment, the lid-shaped front case half 25 with the swingarm 56 is a smaller part. For this reason, when a die for forming the rear case half 26 with the swingarm 56 is changed due to changes in the length and shape of the swingarm 56, the cost for the change is more inexpensive, which can further contribute to a reduction in the cost of a new electric power unit P. Further, although the front case half 25 has the lid shape, the stiffness of the front case half 25 is enhanced by the electric motor 10 attached thereto, so that the front case half 25 can support the swingarm 56 with no problem in terms of the strength.

Although preferred embodiments of the present invention have been described so far, the present invention is not limited to the above-described embodiments, and various modifications in design may be made without departing from the gist of the present invention. For example, the first gear case portion 20 may be divided symmetrically into front and rear portions. In addition, a helical gear may be used instead of the spur drive gear 15 and the spur driven gear 16, and a face gear or a hypoid gear may be used instead of the bevel drive gear 17 and the bevel driven gear 18. Moreover, bearings of the other type, for example, plain bearings, angular contact bearings, or roller bearings may be used instead of the ball bearings 33, 38, 46, 47. Furthermore, the present invention is applicable to a three-wheeled motor vehicle or four-wheeled motor vehicle in which the rear axle 12 is protruded at the left and right outer sides of the transmission case 19 and a pair of rear wheels are attached to the opposite end portions of the rear axle 12.

### [DESCRIPTION OF REFERENCE NUMERALS AND SYMBOLS]

Pelectric power unit
V vehicle (two-wheeled motor vehicle)

[SUBJECT] To provide an electric power unit for a vehicle, which requires small numbers of parts and assembly processes and which is also capable of reducing the weight and securing the stiffness of a transmission case.

[MEANS FOR SOLUTION] A second gear case portion 22 housing a secondary reduction gear train 14 is provided integrally continuous to a rear end of a shaft case portion 21 housing a propeller shaft 11. A first opening portion 23 for inserting the propeller shaft 11 and a drive gear 17 of the secondary reduction gear train 14 and for attaching a first bearing 33 supporting a rear portion of the propeller shaft 11 is provided in a front end of the shaft case portion 21. In addition, a second opening portion 24 for inserting a driven gear 18 of the secondary reduction gear train 14 and a rear axle holder 48 holding a bearing 47 supporting a rear axle 12 is provided in one side portion of the second gear case portion 22.
- 1: vehicle-body frame
- 10: electric motor
- 10a: rotor shaft
- 11: propeller shaft
- 12: rear axle
- 13: primary reduction gear train
- 14: secondary reduction gear train
- 15: drive gear of the primary reduction gear train (spur drive gear)
- 16: driven gear of the primary reduction gear train (spur driven gear)
- 17: drive gear of the secondary reduction gear train (bevel drive gear)
- 18: driven gear of the secondary reduction gear train (bevel driven gear)
- 19: transmission case
- 20: first gear case portion
- 21: shaft case portion
- 22: second gear case portion
- 23: first opening portion
- 24: second opening portion
- 25: front case half
- 26: rear case half
- 33: first bearing (first ball bearing)
- 38: second bearing (second ball bearing)
- 39: bearing holder
- 47: bearing (ball bearing)
- 48: rear axle holder

## Claims

**1.** An electric power unit for a vehicle comprising:
an electric motor (10);
a propeller shaft (11) arranged in parallel with a rotor shaft (10a) of the electric motor (10);
a rear axle (12) arranged perpendicular to the propeller shaft (11) and configured to drive a rear wheel (4) of a vehicle (V);
a primary reduction gear train (13) configured to transmit an output of the rotor shaft (10a) to a front portion of the propeller shaft (11) while reducing a speed of the output;
a secondary reduction gear train (14) configured to transmit an output of the propeller shaft (11) from a rear portion of the propeller shaft (11) to the rear axle (12) while reducing a speed of the output; and
a transmission case (19) supporting the electric motor (10) and housing the propeller shaft (11), the primary reduction gear train (13), and the secondary reduction gear train (14), the transmission case (19) being attached to a vehicle-body frame (1) of the vehicle in such a manner as to be swingable in an up-down direction,
**characterized in that**
the transmission case (19) includes: a first gear case portion (20) supporting the electric motor (10) and housing the primary reduction gear train (13); a shaft case portion (21) provided continuous to a rear portion of the first gear case portion (20) and housing the propeller shaft (11); and a second gear case portion (22) provided integrally continuous to a rear portion of the shaft case portion (21) and housing the secondary reduction gear train (14),
the secondary reduction gear train (14) includes: a drive gear (17) fixedly provided to the propeller shaft (11); and a driven gear (18) fixedly provided to the rear axle (12) and meshing with the drive gear (17),
a first opening portion (23) for inserting the propeller shaft (11) and the drive gear (17) into the shaft case portion (21) and for attaching a first bearing (33) to the shaft case portion (21) or the second gear case portion (22) is provided in a front portion of the shaft case portion (21), the first bearing (33) supporting the propeller shaft (11) while being adjacent to the drive gear (17),
a second opening portion (24) for inserting the driven gear (18) into the second gear case portion (22) and for attaching a rear axle holder (48) holding a bearing (47) supporting the rear axle (12) is provided in one side portion of the second gear case portion (22), and
the shaft case portion (21) and the second gear case portion (22) are integrally formed into a single part.

**2.** The electric power unit for a vehicle according to claim 1, wherein
a bearing holder (39) holding a second bearing (38) supporting the front portion of the propeller shaft (11) is attached to the first opening portion (23).

**3.** The electric power unit for a vehicle according to claim 2, wherein
the first gear case portion (20) is separably joined to a front end of the shaft case portion (21), and
the bearing holder (39) is formed integrally with the first gear case portion (20).

**4.** The electric power unit for a vehicle according to claim 1, wherein
a second bearing (38) supporting the front portion of the propeller shaft (11) is attached to a front portion of the first gear case portion (20), the front portion supporting the electric motor (10).

**5.** The electric power unit for a vehicle according to any one of claims 1 to 4, wherein
the first gear case portion (20) includes: a front case half (25) supporting the electric motor (10); and a rear case half (26) separably joined to a rear end of the front case half (25) and being continuous to a front end of the shaft case portion (21).

**6.** The electric power unit for a vehicle according to claim 1, wherein
the propeller shaft (11) and the drive gear (17) of the secondary reduction gear train (14) are integrally formed into a single part.

**7.** The electric power unit for a vehicle according to claim 1, wherein
the rear axle (12) and the driven gear (18) of the secondary reduction gear train (14) are integrally formed into a single part.

**8.** The electric power unit for a vehicle according to any one of claims 1 to 7, wherein
the transmission case (19) is made of an Al alloy,
the propeller shaft (11) is made of steel,
a drive gear (15) and a driven gear (16) included in the primary reduction gear train (13) are a spur gear or a helical gear,
a difference in thermal expansion in a longitudinal direction in the transmission case (19) and the propeller shaft (11) is absorbed by meshing portions of the drive gear (15) and the driven gear (16).

**9.** The electric power unit for a vehicle according to any one of claims 1 to 8, wherein
a rear end portion of a swingarm (56) extending frontward from a lower portion of the transmission case (19) and facing a lower surface of the electric motor (10) is fixedly provided to the transmission case (19), and
a front end portion of the swingarm (56) is turnably coupled to the vehicle-body frame (1) with a pivot (57).

**10.** The electric power unit for a vehicle according to claim 9, wherein
the transmission case (19) includes: a first gear case portion (20) supporting the electric motor (10) and housing the primary reduction gear train (13); and a shaft case portion (21) coupled to a rear portion of the first gear case portion (20) and housing the propeller shaft (11), and
the rear end portion of the swingarm (56) is fixedly provided to a lower portion of the first gear case portion (20).

**11.** The electric power unit for a vehicle according to claim 9 or 10, wherein
an arm attachment portion (63) is formed on a lower portion of the transmission case (19), and
the rear end portion of the swingarm (56) is detachably coupled to the arm attachment portion (63).

**12.** The electric power unit for a vehicle according to claim 10, wherein
the first gear case portion (20) includes: a front case half (25) supporting the electric motor (10); and a rear case half (26) separably joined to a rear end of the front case half (25) and being continuous to a front end of the shaft case portion (21), and
the swingarm (56) is formed integrally on one of the front case half (25) and the rear case half (26).

**13.** The electric power unit for a vehicle according to claim 10, wherein
the first gear case portion (20) and the shaft case portion (21) are separably coupled to each other, and
the swingarm (56) is formed integrally on the first gear case portion (20).

**14.** The electric power unit for a vehicle according to any one of claims 9 to 13, wherein
the swingarm (56) includes: a pair of left and right pivot boss portions (66) supported by the pivot (57); and a cross member portion (67) integrally coupling rear portions of the pivot boss portions (66); and a pair of left and right arm portions (68) protruding rearward from the cross member portion (67) and fixedly provided to the transmission case (19), and
a reinforcement rib (74) expanding in a horizontal direction between the arm portions (68) and the cross member portion (67) and facing the lower surface of the electric motor (10) is formed.

**15.** The electric power unit for a vehicle according to claim 1, wherein
the electric motor (10) is arranged such that an axis (r) of the rotor shaft (10a) is located above an axis (p) of the propeller shaft (11).
